# FASCICULE DE BREVET EUROPEEN

(11) **EP 1 338 200 B1**
(45) Date de publication et mention de la délivrance du brevet: **27.10.2004**
(21) Numéro de dépôt: 03290357.7
(22) Date de dépôt: 14.02.2003
(51) Int. Cl.: A01N 43/16

(54) **Agent pour la stimulation des défenses naturelles des plantes et procédé pour sa mise en oeuvre**
Mittel zum Stimulieren der natürlichen Abwehr bei Pflanzen und Verfahren zu ihrer Verwendung
Agent for stimulating the natural plant defences and method for the use thereof

(30) Priorité: 20.02.2002 FR 0202144
(43) Date de publication de la demande: 27.08.2003
(73) Titulaire: LABORATOIRES GOEMAR S.A., 35400 Saint-Malo (FR)
(72) Inventeur: Yvin, Jean-Claude, 35400 Saint-Malo (FR); Menard, Rozenn, 67100 Strasbourg (FR); Kauffmann, Serge, 67400 Illkirch-Graffenstaden (FR); Fritig, Bernard, 67460 Souffelweyersheim (FR)
(74) Mandataire: Koch, Gustave

(56) Documents cités:
- WO-A-94/00993
- WO-A-99/03346
- FR-A- 2 783 523

## Description

L'invention a pour objet un agent pour la stimulation des réactions de défenses naturelles des plantes, s'agissant tout particulièrement des plantes agronomiquement utiles et des plantes ornementales.

Elle a également pour objet l'utilisation dudit agent pour la stimulation en question et un procédé pour sa mise en oeuvre.

La stimulation des réactions de défenses naturelles des plantes est un problème des plus actuels et fait l'objet de nombreuses recherches.

Cette stimulation se traduit, dans le cas d'une plante ayant reconnu une agression par un agent pathogène tel qu'un virus, une bactérie, un champignon ou un insecte, par le développement d'un ensemble de modifications biologiques qui confèrent à cette plante un état de résistance permettant de localiser l'agresseur à son site d'attaque.

On connaît des produits appelés éliciteurs qui, mis au contact de la plante, sont capables de stimuler dans celle-ci les mêmes réactions de défense que celles que développe la plante quant elle est attaquée par un agent pathogène.

Ces réactions de défense sont de plusieurs types rappelés ci-après :
- accumulation d'antibiotiques naturels plus connus sous le nom de phytoalexines (par exemple, dans le cas du tabac, la scopolétine est une phytoalexine émettant une fluorescence bleue sous lumière ultra-violette),
- épaississement des parois cellulaires par synthèse de lignine et de protéines de réticulation,
- synthèse de protéines de défense du genre des protéines PR (Pathogenesis-Related) qui sont regroupées en différentes familles dont certaines possèdent des activités chitinase (famille PR3) ou glucanase (famille PR2), ou encore des enzymes des voies métaboliques secondaires telles que les orthodiphénol-*0*-méthyltranférases ou OMT qui sont impliquées dans la synthèse des phytoalexines et dans l'épaississement des parois,
- synthèse de messagers secondaires tels que l'acide salicylique impliqué, notamment dans le cas du tabac, dans la stimulation des isoformes acides des protéines PR et l'éthylène qui est impliqué, notamment dans le cas du tabac, dans la stimulation des isoformes basiques des protéines PR.

Parmi les susdits éliciteurs, on peut citer les oligo β 1-3 glucanes et notamment la laminarine qui élicitent chez diverses plantes agronomiquement utiles les réactions de défense en question, (voir WO-A-9903346 et WO-A-9400993); les réponses maximales sont généralement atteintes lorsque les oligo β 1-3 glucanes sont mis en oeuvre sous forme de compositions liquides dont la concentration en oligo β 1-3 glucanes est de l'ordre de 200 mg/l ; ces réponses se maintiennent à un niveau comparable jusqu'à des concentrations de l'ordre de 4 g/l ; elles sont obtenues pour des quantités mises en oeuvre par hectare de 4 à 200 g.

Au vu de la demande toujours croissante, par l'utilisateur, de produits de plus en plus efficaces, la Société Demanderesse a poursuivi ses recherches et a trouvé que, dans le cas des β 1-3 glucanes et notamment de la laminarine qui est un glucane particulier dont le degré de polymérisation est de 20 à 30, de préférence de 23 à 25, il était possible, de façon tout à fait surprenante et inattendue, d'augmenter très sensiblement la faculté de stimulation des réactions de défense naturelles des plantes en les soumettant à une réaction de sulfatation chimique qui, dans le cas de la laminarine est conduite de façon à amener le degré de sulfatation à une valeur égale ou supérieure à 1,9 de préférence de 2 à 2,5.

En conséquence, les sulfates des β 1-3 glucanes et notamment le sulfate de laminarine peuvent être mis en oeuvre en tant qu'agents éliciteurs sous la forme de compositions aqueuses dont la concentration en dérivé sulfaté est, de façon surprenante et inattendue, sensiblement inférieure à la concentration en β 1-3 glucanes non sulfatés, notamment en laminarine non sulfatée des compositions de l'art antérieur ; de plus, la quantité de sulfate de β 1-3 glucane et notamment de laminarine qu'il convient d'appliquer par hectare est elle aussi sensiblement inférieure à la quantité en β 1-3 glucanes et notamment en laminarine non sulfatés nécessaire pour obtenir la stimulation recherchée.

Il s'ensuit que l'agent, conforme à l'invention, de stimulation des réactions de défense naturelles des plantes identifiées plus haut, est constitué par un sulfate de β 1-3 glucane et notamment par le sulfate de laminarine, dont le degré de sulfatation est supérieur ou égal à 1,9, de préférence de 2 à 2,5.

L'invention vise l'utilisation des sulfates de β 1-3 glucanes et notamment de laminarine en tant qu'agents de stimulation des réactions de défense naturelles des plantes.

Et elle vise également un procédé de stimulation des réactions de défense naturelles des plantes caractérisé par le fait que l'on applique sur les plantes à traiter une composition aqueuse comportant, une concentration efficace de sulfate de β 1-3 glucane et plus particulièrement une concentration d'au moins 1mg/l, de préférence d'au moins 5mg/litre, et plus préférentiellement encore d'au moins 10mg/l. en sulfate de laminarine de degré de sulfatation supérieur ou égal à 1,9 de préférence de 2 à 2,5, cette composition étant appliquée aux cultures à traiter en une quantité suffisante pour apporter par hectare une quantité efficace du sulfate de β 1-3 glucane et, dans le cas du sulfate de laminarine en une quantité suffisante pour apporter de 0,4 à 4g de sulfate de laminarine par hectare.

La limite supérieure de la concentration en sulfate de β 1-3 glucane des compositions mises en oeuvre conformément à l'invention n'est pas une donnée critique; dans la pratique et dans le cas du sulfate de laminarine, une concentration supérieure à 500mg/l n'apporte aucun bénéfice supplémentaire.

Les travaux dont les résultats sont à la base de l'invention définie ci-dessus apparaissent à la lecture de l'exposé qui suit.

Pour ce qui est tout d'abord de la substance active proprement dite, en l'occurrence le sulfate de laminarine, elle peut être obtenu de la manière décrite ci-après, sachant que les autres β 1-3 glucanes sont obtenus par des procédés décrits dans la littérature scientifique.

La laminarine, qui est commercialisée par la Société Demanderesse sous la marque de fabrique PHYCARINE, peut être extraite à partir d'une matière première constituée par des algues brunes, notamment par mise en oeuvre du procédé décrit dans le brevet FR 92 08387.

La sulfatation de cette laminarine peut être effectuée par mise en oeuvre du procédé décrit dans la publication suivante :
- Alban S, Kraus J, Franz G : Synthesis of laminarin sulfates with anticoagulant activity, Arzneim.Forsch./drug Res (1992) 42 ; 1005-1008.

Un procédé perfectionné de sulfatation de la laminarine est décrit dans la thèse de Susanne Alban, soutenue en 1993 à l'Université de Regensburg et portant le titre « Synthese und physiologische Testung neuartiger Heparinoide ».

Ces procédés permettent d'obtenir un sulfate de laminarine hautement substitué, sans dégradation et avec une bonne reproductibilité sous de bonnes conditions du point de vue économique, tout en restant simples.

Ces procédés peuvent être adaptés à la sulfatation des β 1-3 glucanes en général.

Pour aboutir à une sulfatation efficace de la laminarine sans dégradation des chaînes polysaccharidiques, la réaction de sulfatation doit être effectuée sous des conditions correspondant à une absence absolue d'eau.

Avant la sulfatation, la laminarine est séchée, par exemple sur pentoxide de phosphore (P₂O₅) et ensuite dissoute dans du diméthylformamide ou DMF. De par ses effets alternatifs sur le polysaccharide, le DMF a une influence activante sur la substitution. En effet, l'association du DMF polaire avec les groupes OH conduit à la coupure des liaisons hydrogène intra et inter moléculaires et à la désintégration des structures supérieures.

Pour mettre en oeuvre la réaction de sulfatation, on peut avoir recours avantageusement au complexe SO₃-pyridine.

Par suite de la coordination de l'accepteur d'électrons SO₃ avec le donneur d'électrons pyridine, la réactivité difficilement contrôlable du SO₃ qui se traduit par des réactions fortement exothermiques entraînant des dégradations, se trouve réduite. Le complexe SO₃-pyridine présente par rapport à d'autres complexes l'avantage d'être ni trop réactif ni trop stable c'est-à-dire trop lent du point de vue réaction.

En raison du fait que le degré de sulfatation obtenu est proportionnel à l'excès molaire en réactif de sulfatation et étant donné que l'on cherche à obtenir un degré de substitution supérieur à 2, on met avantageusement en oeuvre une concentration de 6 moles de SO₃-pyridine par mole de glucose.

Pour garantir l'absence d'eau, on peut travailler sous atmosphère d'argon.

De plus, dès le début de la réaction on ajoute de la pyridine au réactif de sulfatation et ce, en quantité équimolaire, en vue de capter directement l'acide sulfurique qui pourrait se former par réaction du complexe SO₃-pyridine avec l'eau. Tant la concentration de la laminarine que celle du réactif de sulfatation doivent être aussi élevées que possible, la solubilité du polysaccharide et du réactif de sulfatation, étant limitants. Pour éviter au début de la réaction un refroidissement du mélange qui pourrait entraîner des problèmes de solubilité et pour obtenir une substitution la plus régulière possible, la solution du complexe SO₃-pyridine dans le DMF pourrait ne pas être ajoutée en une seule fois mais de manière continue pendant une durée de 4 heures.

La réaction de sulfatation peut être effectuée à une température de 20 à 60°C, de préférence d'environ 40°C. Des températures plus élevées entraînent une substitution plus efficace mais, également, une dégradation des chaînes.

Après l'addition du réactif de sulfatation, on continue à agiter le mélange pendant 6 heures à 60°C. A cette température, il se produit une substitution supplémentaire sans dégradation des chaînes.

Le surnageant du mélange est séparé par décantation. Le résidu est dissous dans 2,5 M de NaOH puis mélangé avec 10 fois son volume d'éthanol à 99%. Le précipité qui se produit à une température de 4-8°C pendant la nuit est isolé puis dissous dans de la soude diluée (solution de pH d'environ 9). La solution est dialysée pour enlever les sels et les molécules de bas poids moléculaire grâce une membrane de type Spectrapor à seuil de coupure 1000 D puis amenée à un pH de 7,0 par addition de NaOH et ensuite lyophilisée. Le sulfate de laminarine résultant se présente sous forme de sel de sodium.

Le poids moléculaire de la macromolécule est déterminé en tant que volume hydrodynamique par chromatographie sur gel avec mise en oeuvre d'un système dit « Fast Protein Liquid Chromatography » ou FPLC commercialisé par la Société Pharmacia. La détection du profil d'élution (éluant : 0.1M NaCl avec 0,05% d'azide de sodium, 30ml/h) à l'aide d'un dispositif connu sous la marque Superdex 75HR10/30 (domaine de séparation 3-70kd) est effectuée par la mesure de l'indice de réfraction. Le sulfate de laminarine correspond à un pic étroit symétrique ; la largeur de ce pic est la même pour la laminarine non sulfatée et pour la laminarine sulfatée ce qui suggère que la longueur de la chaîne reste la même. Le poids moléculaire relatif est déterminé à l'aide d'une courbe standard avec des pullulans (polymère standard : 5800-853000 d, Polymer Laboratories, Separation Science Division). Par suite de la présence des groupes sulfates fortement hydratés, le volume hydrodynamique est supérieur à la masse moléculaire réelle.

Le degré de sulfatation est déterminé par voie de titration conductimétrique de l'acide libre du polysaccharide sulfaté en utilisant de la soude 0,1N, ou par chromatographie ionique après hydrolyse en utilisant un système HPLC. La première méthode présente l'avantage d'être également propre à des recherches relatives à la stabilité (la consommation de soude s'accroît lorsque des groupes sulfates sont éliminés) alors que la méthode HPLC nécessite moins de substance et peut être automatisée. A titre de contrôle, il est possible de déterminer la teneur en soufre par analyse élémentaire.

Il est de plus possible de contrôler l'homogénéité de la sulfatation et la répartition des groupes sulfate sur les différentes positions dans la molécule de glucose par une forme modifiée de l'analyse de méthylation suivie d'un examen GC-MS (à savoir Chromatographie Gaz, Spectrométrie de Masse). La sulfatation est pratiquement totale, c'est-à-dire presque tous les groupes hydroxyle en position 6 sont sulfatés. Lors de la substitution des groupes OH secondaires, il n'y a pas de différence significative entre la sulfatation des groupes en position 2 et celle des groupes en position 4.

Le degré de sulfatation obtenu en procédant comme indiqué ci-dessus est supérieur à 1, 9 et plus précisément de 2 à 2,5.

Le degré de polymérisation du sulfate de laminarine ainsi obtenu est de 20 à 30, plus précisément de 23 à 25.

Dans le cadre des susdits travaux, on a examiné la stimulation des réactions de défenses naturelles obtenue dans les plantes agronomiquement utiles et ornementales, et notamment dans le cas du tabac, en procédant au traitement desdites plantes d'une part par utilisation de la laminarine non sulfatée (corde H11) et d'autre part, par utilisation de la laminarine sulfatée (code H11-S).

Trois lots de laminarine non sulfatée, respectivement désignés par H11-C1, H11-C2 et H11-C3, ont été utilisés ; les deuxième et troisième lots sont ceux qui ont servi pour la sulfatation chimique ultérieure et constituent donc le véritable « contrôle » par rapport à la laminarine sulfatée.

Le traitement a été appliqué d'une part à des plantes entières et, d'autre part, à des suspensions cellulaires, les variétés de plantes retenues étant :
- la variété Nicotiana tabacum cv. Samsun NN désignée par NN
- la variété Nicotiana tabacum cv. Bel3 désignée par Bel3

Les suspensions cellulaires dont il a été question ci-dessus sont des suspensions obtenues à partir du tissu végétal de Nicotiana tabacum cv. Bright Yellow.

On a tout d'abord traité des plantes entières des variétés NN et Bel3 par des compositions aqueuses comportant respectivement les fractions H11-C1 et H11-S à la concentration de 200 mg/l, qui est, comme noté plus haut, la dose optimale pour l'activité élicitrice des glucanes non sulfatés.

Le traitement consiste à infiltrer les susdites compositions aqueuses à base des fractions H11-C1 et H11-S dans le mésophylle des feuilles des plantes traitées.

L'infiltration est réalisée en perçant la feuille de tabac avec une aiguille puis en appliquant perpendiculairement au plan de la feuille une seringue contenant la solution à injecter. Immédiatement après l'injection, la zone d'infiltration, visible en éclairant la feuille par la face inférieure, est délimitée à l'aide d'un stylo feutre. La zone infiltrée est désignée par ZI.

Du point de vue symptomatologique, on constate que les tissus infiltrés avec H11-C1 ne présentent aucun signe d'altération, alors que ceux infiltrés avec H11-S présentent une dépigmentation.

Cette dépigmentation se traduit par une perte de la couleur verte au niveau des tissus infiltrés.

Par ailleurs et toujours au niveau des tissus infiltrés avec H11-S, on observe une fluorescence bleue sous lumière U.V.

Cette fluorescence est due à l'accumulation de scopolétine.

Dans un premier temps, on a étudié l'influence des compositions à base de H11-C1 et de H11-S sur l'induction de réponses typiques de défense telles que l'expression des protéines PR et l'activité OMT.

Concernant les protéines PR, l'expression des isoformes acides et basiques de 4 familles de ces protéines, à savoir les familles PR1, PR2, PR3 et PR5 a été analysée dans le cas des plantes de tabac des variétés NN et Bel3 infiltrés avec des compositions à base des fractions H11-C1 et H11-S, à une concentration de 200 mg/l. On constate qu'elle est plus forte dans les zones infiltrées par H11-S que dans celles infiltrées par H11-C1.

L'analyse de ces protéines est effectué par immunodétection comme décrit dans la publication aux noms de Costet L., Dorey S., Fritig B. et Kauffmann S., parue sous le titre
*« A pharmacological approach to test the diffusible signal activity of reactive oxygen intermediates in elicitor-treated tobacco leaves »,*
dans Plant Cell and Physiology (2002) 43 ; 91-98.

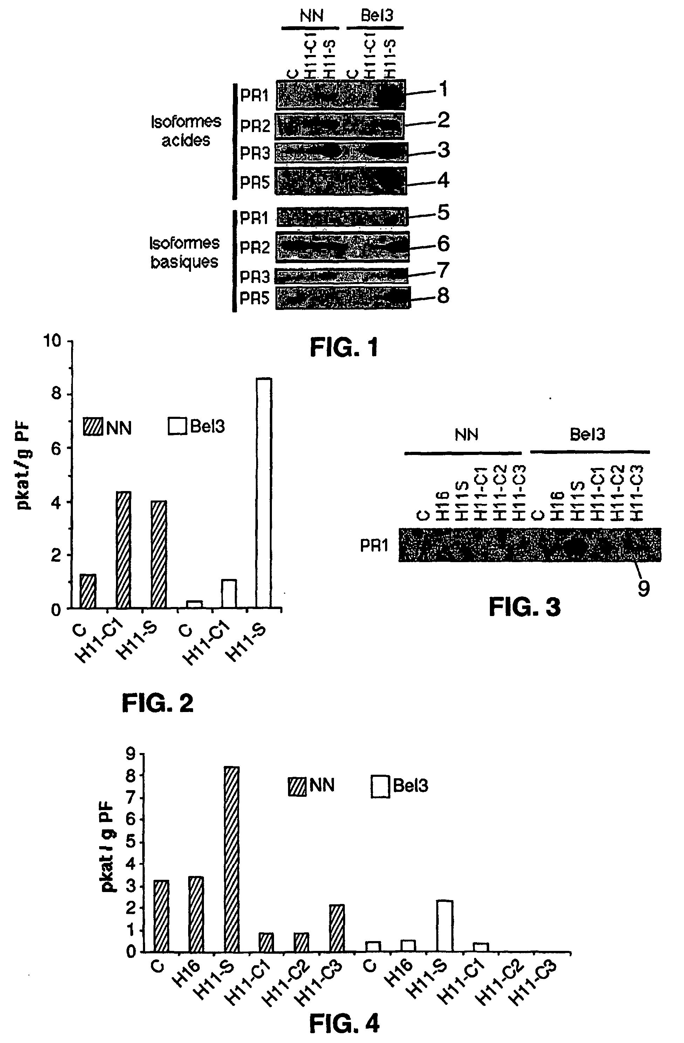

Les résultats obtenus par cette analyse sont réunis sur la figure 1.

Cette figure 1 montre sur les pistes 1 à 8 l'induction des protéines acides PR1, PR2, PR3 et PR5 ainsi que celles des protéines basiques PR1, PR2, PR3 et PR5 dans le cas des variétés NN et Bel3 infiltrées d'une part avec de l'eau (symbole C) comme témoin, d'autre part avec la composition ayant une concentration de 200mg/l en H11-C1, et d'autre part encore avec la composition ayant une concentration de 200mg/l en H11-S.

L'intensité de l'induction se traduit sur les pistes 1 à 8 par des taches plus ou moins prononcées.

L'examen de ces taches sur les pistes de la figure 1 montre que l'effet est nettement plus marqué dans le cas de la variété Bel3 et plus fort dans le cas de la composition à base de H11-S.

On a également mesurée l'activité OMT induite par les compositions à base des fractions H11-C1et H11-S.

Pour la mesure de cette activité, on procède comme décrit par Costet L., Dorey S., Fritig B. et Kauffmann S. dans la publication identifiée ci-dessus et parue sous le titre
*« A pharmacological approach to test the diffusible signal activity of reactive oxygen intermediates in elicitor-treated tobacco leaves »,*
dans Plant Cell and Physiology (2002) 43 ; 91-98.

Les résultats obtenus sont illustrés par la figure 2.

Celle-ci montre la stimulation de l'activité OMT, exprimée en pkat/g PF (c'est-à-dire en picokatal par gramme de produit frais PF, autrement dit de matière fraîche végétale), par infiltration avec de l'eau comme témoin (référence C), puis avec les compositions à base de H11-C1 et H11-S, les plantes traitées étant toujours les variétés NN et Bel3.

La stimulation est nettement plus intense avec la composition à base de H11-S dans le cas de la variété Bel3.

En revanche, elle est similaire pour les compositions à base de H11-C1 et de H11-S dans le cas de la variété NN.

A partir des résultats montrés sur la figure 2 en rapport avec la variété Bel3 il est possible de prévoir que pour obtenir une stimulation de l'activité OMT égale à celle obtenue avec une composition à base de H11-C1 à une concentration de 200mg/l il suffirait d'utiliser une composition à base de H11-S d'une concentration de l'ordre de 8 à 9 fois plus faible.

On a réalisé la même expérience d'expression des protéines acides en recherchant plus particulièrement celle de la protéine acide PR1 dans les variétés NN et Bel3 traitées d'une part avec de l'eau comme témoin (C) et d'autre part avec cinq compositions aqueuses respectivement à base des fractions H11-C1, H11-C2, H11-C3, H11-S et H16 toutes à la concentration de 200mg/l, la fraction H16 étant à base de polyfucanes, qui sont des polysaccharides naturellement sulfatés.

Les prélèvements de tissus infiltrés sur lesquels ont été faites les manipulations qui sont illustrées par la piste 9 montrée figure 3, ont été effectuées 3 jours après le traitement d'infiltration.

L'intensité des taches apparaissant sur la piste 9 montre que la plus forte expression est obtenue pour H11-S, notamment dans le cas de la variété Bel3.

On a également mesuré l'activité OMT après infiltration des variétés NN et Bel3 avec les mêmes compositions.

Les résultats obtenus sont représentés à la figure 4 qui montre la stimulation ainsi obtenue de l'activité OMT exprimée en pkat/g PF.

On constate à l'examen de la figure 4 que les résultats obtenus avec H11-S sont nettement meilleurs que ceux obtenus avec H16 et avec les fractions de contrôle C, H11-C1, H11-C2, H11-C3.

Ces résultats permettent de faire les mêmes conclusions que celles tirées de la figure 2, à savoir qu'une composition à base de H11-S huit fois moins concentrée qu'une composition à base des fractions H11-C1, H11-C2 et H11-C3 permet d'obtenir un résultat comparable.

Par ailleurs, tant dans le cas de l'expression de la protéine acide PR1 (figure 3) que dans le cas de la stimulation de l'activité OMT (figure 4) la faible activité constatée pour les compositions à base de H16 c'est-à-dire à base de polyfucanes naturellement sulfatés, montre que l'amélioration de la stimulation obtenue à l'aide de la laminarine sulfatée par rapport à la laminarine non sulfatée était inattendue et surprenante.

On a examiné ensuite la stimulation, après infiltration avec les compositions H11-C et H11-S identifiées plus haut, de l'accumulation d'acide salicylique et de scopolétine dans les variétés NN et Bel3.

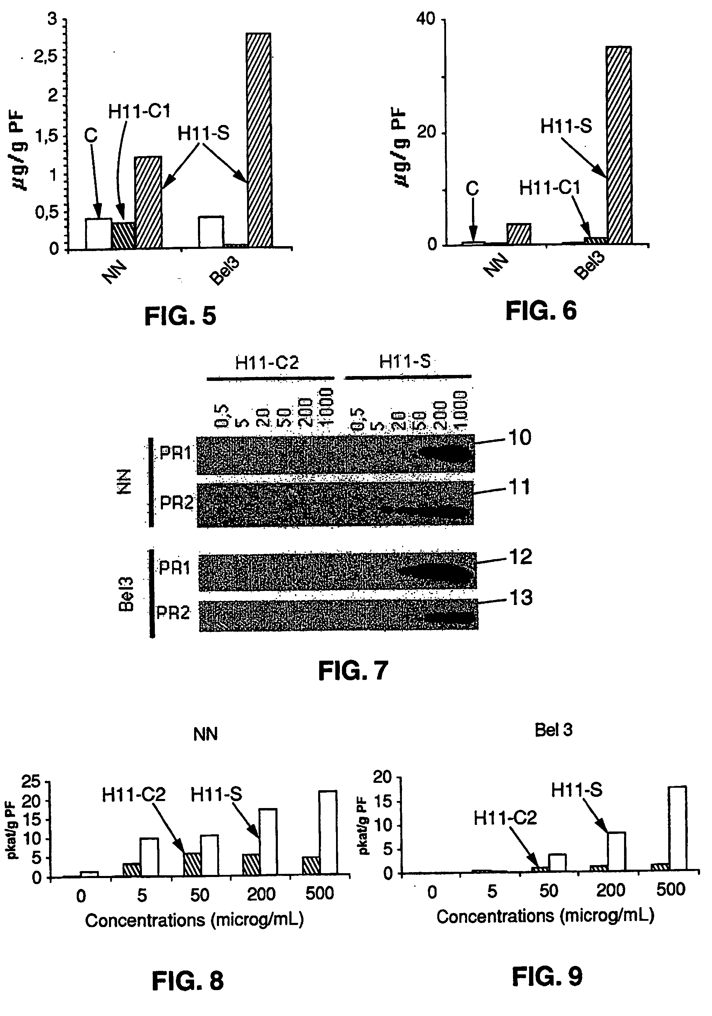

Les résultats de ces expériences apparaissent aux figures 5 et 6 qui montrent respectivement l'accumulation - -exprimée en µg respectivement d'acide salicylique et de scopolétine par gramme de tissus infiltrés - - d'acide salicylique total (formes libres et conjuguées) et de scopolétine totale (formes libres et conjuguées) déterminées sur des tissus des variétés NN et Bel3 infiltrés comme indiqué plus haut d'une part avec de l'eau (C) comme témoin et d'autre part avec des compositions à base des fractions H11-C1 et H11-S, contenant respectivement 200mg/l de ces fractions, les tissus infiltrés étant prélevés 3 jours après le traitement d'infiltration.

Ici encore, il apparaît clairement, tant pour l'accumulation d'acide salicylique que pour celle de scopolétine qu'un résultat donné obtenu avec une composition d'une concentration de 200mg/l de fraction H11-C1, peut être obtenu avec une composition à base de la fraction H11-S sensiblement plus faible, le rapport des concentrations qui est plus marqué dans le cas de la variété Bel3 pouvant atteindre le chiffre de 30.

De l'ensemble de ces expériences il résulte que la sulfatation chimique augmente très fortement l'activité élicitrice des réponses de défenses naturelles des plantes traitées.

Cette augmentation de scopolétine est d'autant plus inattendue et surprenante qu'elle ne se produit dans le cas d'autres oligoglucanes sulfatés, en l'occurrence les fucanes, qu'avec une intensité beaucoup plus faible, de l'ordre de 5 à 10 fois plus faible en ce qui concerne la scopolétine et de l'ordre de 2 à 5 fois plus faible pour ce qui est de l'acide salicylique.

Ces constatations permettent d'envisager des traitements avec des compositions aqueuses dont les concentrations en substance active, en l'occurrence en sulfate de β 1-3 glucane et notamment en sulfate de laminarine, et dont les apports à l'hectare en substance active sont beaucoup plus faibles, notamment dans les proportions indiquées plus haut, que les concentrations et apports à l'hectare nécessaires dans le cas des β 1-3 glucanes et notamment de la laminarine non sulfatés.

Dans une autre série d'essais, on a traité les variétés NN et Bel3 avec des compositions inductrices présentant respectivement les concentrations de 0,5 puis de 5, de 20, de 50, de 200 et de 1000 mg/l en H11-S et H11-C2 et on a analysé l'expression des protéines PR1 et PR2 acides dans le cas desdites variétés NN et Bel3.

Ces essais montrent que plus la concentration en laminarine sulfatée est élevée plus les symptômes de chlorose sont sévères.

Par ailleurs, les premiers symptômes de fluorescence sous lumière UV sont obtenus pour des doses de 50 mg/l de laminarine sulfatée.

La figure 7 montre l'influence de la concentration des compositions mises en oeuvre sur l'expression des protéines PR1 et PR2 acides déterminée par immunodétection.

Cette expression des protéines PR1 et PR2 acides résulte de l'intensité des taches apparaissant sur les pistes 10, 11, 12, 13 et qui sont le résultat de la détermination par immunodétection.

Il découle plus particulièrement de la figure 7 que les protéines acides PR1 et PR2 sont détectées dès la mise en oeuvre de concentrations de 5 à 20 mg/l de H11-S alors que ces mêmes protéines sont à peine détectables, même pour des concentrations de 1000 mg/l de laminarine non sulfatée H11-C2.

Dans une autre série d'essais, on a traité les variétés NN et Bel3 avec les mêmes compositions inductrices présentant respectivement les concentrations de 0,5 puis de 5, de 50, de 200 et de 500 mg/l en H11-S et H11-C2 et on a analysé l'activité OMT dans le cas des variétés NN et Bel3.

Les figures 8 et 9 montrent les valeurs de la stimulation de l'activité OMT (exprimée en pkat/g PF) respectivement dans le cas des variétés NN et Bel3.

Il résulte de ces figures que l'activité OMT croît progressivement en fonction des concentrations en H11-S et en H11-C2 mais beaucoup plus vite dans le cas de H11-S.

D'une façon générale, la réponse maximale pour l'expression des protéines PR et pour l'activité OMT est atteinte pour une dose de 500 mg/l de laminarine sulfatée, concentration à laquelle l'activité OMT est dans le cas de la variété NN environ quatre fois, et dans le cas de la variété Bel3, environ dix fois plus élevée que celle obtenue après traitement des mêmes variétés par H11-C2.

Des expériences complémentaires ont montré que les traitements avec H11-S induisent les voies de signalisation de l'acide salicylique et de l'éthylène qui gouvernent la stimulation de toute une batterie de réponses de défense. Sur le plan pratique ceci suggère que les traitements avec H11-S induisent également des réponses de défense autres que celles décrites ici. ,

D'autres expériences ont été effectuées sur des suspensions cellulaires comme indiqué plus haut.

L'une de ces expériences consiste en ce qu'on appelle le test d'alcalinisation du milieu extracellulaire et l'autre en ce qu'on appelle le test de l'état réfractaire.

Dans le cas du premier test on travaille sur une suspension cellulaire obtenue à partir des tissus végétaux de la variété Bright Yellow. À trois échantillons de 8ml de cette suspension cellulaire on ajoute respectivement 160 µl de trois compositions aqueuses contenant respectivement 10g/l des fractions H11-C1, I25 (oligofucanes) et H11-S, la concentration finale en chacun des oligosaccharides étant de 200 µg/ml.

L'ajout des compositions à base de H11-C1 ou de 125 induit au bout de 10 min une forte alcalinisation du milieu (1,5 unité pH) tandis que l'ajout de la composition à base de H11-S induit au bout du même temps une très faible alcalinisation (0,3 unité pH).

Ce résultat est surprenant car l'homme du métier devait s'attendre d'après les résultats des expérimentations comparatives précédentes portant sur les glucanes non sulfatés et les fucanes sulfatés à une corrélation entre l'intensité de la réponse d'alcalinisation du milieu et l'intensité de l'induction des réponses de défense ; or c'est le contraire que l'on constate pour la laminarine non sulfatée et les oligofucanes sulfatés d'une part et la laminarine sulfatée d'autre part, ce qui constitue un argument supplémentaire en faveur du fait que l'invention implique l'activité inventive nécessaire pour être brevetable.

En ce qui concerne le test de l'état réfractaire, il consiste à procéder comme indiqué dans la publication de Klarzinsky O., Plesse B., Joubert J.M., Yvin J.C., Kopp M., Kloareg B. et Fritig B. dans « Plant Physiology (2001) 124 ; 1027-1037 sous le titre
*« Linear β-1,3 glucans are potent elicitors of defense responses in tobacco »*

Dans le cadre de ce test, on traite tout d'abord un volume de 8 ml de suspension cellulaire par un volume de 160 µl de composition aqueuse contenant 10g/l de fraction H11-S (concentration finale en H11-S de 200 µg/ml). Lorsque le pH est revenu à la valeur de départ, après l'alcalinisation transitoire du milieu telle qu'elle est décrite ci-dessus, on ajoute 160 µl de composition aqueuse contenant 10g/l de fraction H11-C1(concentration finale en H11-C1 de 200 µg/ml).

Parallèlement, on traite le même volume de suspension cellulaire successivement par les mêmes volumes que plus haut de compositions aqueuses contenant respectivement 10g/l de fraction H11-S et 125.

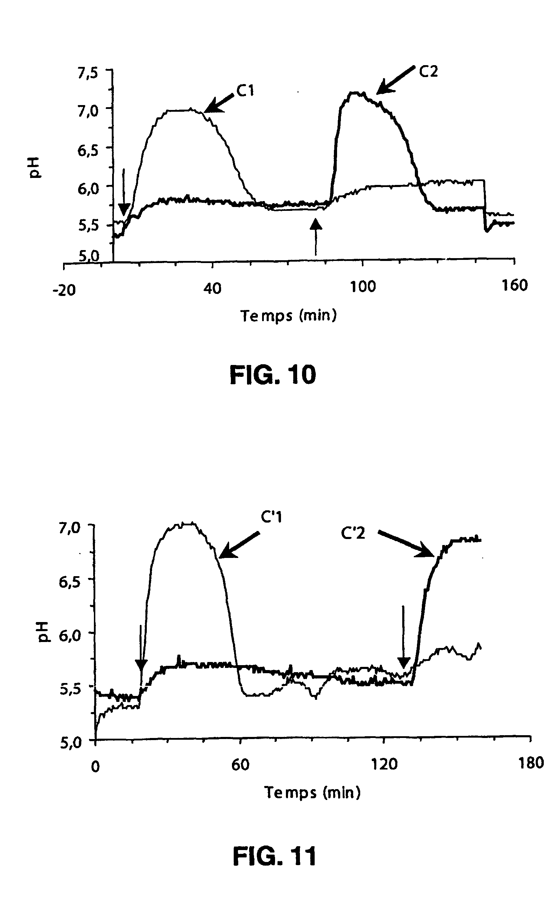

On mesure la variation du pH en fonction du temps exprimé en minutes pendant 160 minutes ce qui donne les courbes C1 (figure 10) et C'1 (figure 11) respectivement pour la première et la deuxième expérience.

Puis on procède une nouvelle fois aux même expériences mais en inversant la succession des traitements ; autrement dit, dans le premier cas, on traite la suspension cellulaire d'abord par composition à base de H11-C1 puis par celle à base de H11-S et dans le deuxième cas, on ajoute d'abord la composition à base de 125 puis celle à base de H11-S.

On fait les mêmes mesures de pH et on obtient les courbes C2 (figure 10) et C'2 (figure 11).

A l'examen des figures 10 et 11, on constate que la réponse au premier traitement n'interagit pas avec la réponse d'alcalinisation du milieu après le deuxième traitement (courbes C1 et C'1).

L'inversion des traitements (courbes C2 et C'2) confirme cette absence d'état réfractaire, ce terme signifiant que les cellules percevant d'une manière spécifique une molécule X réagissent en alcalinisant le milieu et qu'elles ne sont plus capables de faire cette réaction si l'on ajoute cette même molécule quelques minutes ultérieurement alors qu'elles sont toujours capables de faire cette réaction si l'on ajoute une molécule Y perçue différemment que la molécule X.

En raison de ces constatations, les β 1-3 glucanes sulfatés et notamment la laminarine sulfatée seraient perçus spécifiquement, n'étant pas reconnus par le même récepteur que celui des β 1-3 glucanes et notamment de la laminarine non sulfatés ou des fucanes sulfatés.

Sur le plan pratique, il s'ensuit que la sulfatation chimique des β 1-3 glucanes et notamment de la laminarine produit de nouvelles molécules perçues vraisemblablement différemment que les β 1-3 glucanes et notamment la laminarine non sulfatés et que la combinaison de ces 2 types de molécules respectivement non sulfatées et sulfatées pourrait avoir un effet de synergie dans l'activation des réponses de défense des plantes.

## Revendications

1. Agent de stimulation des réactions de défense naturelles des plantes agronomiquement utiles et des plantes ornementales constitué par un sulfate de β 1-3 glucane et, notamment, par le sulfate de laminarine dont le degré de sulfatation est supérieur ou égal à 1,9, de préférence de 2 à 2,5.

2. Utilisation d'un sulfate de β 1-3 glucane et, notamment, du sulfate de laminarine dont le degré de sulfatation est supérieur ou égal à 1,9 et de préférence, de 2 à 2,5, en tant qu'agent de stimulation des réactions de défense naturelles des plantes agronomiquement utiles et des plantes ornementales.

3. Procédé de stimulation des réactions de défense naturelles des plantes agronomiquement utiles et des plantes ornementales, **caractérisé par le fait que** l'on applique sur les plantes à traiter une composition aqueuse comportant une concentration efficace-d'un sulfate de β 1-3 glucane et plus particulièrement une concentration d'au moins 1mg/litre, de préférence d'au moins 5mg/l et plus préférentiellement encore d'au moins 10mg/l, du sulfate de laminarine de degré de sulfatation supérieur ou égal à 1,9 de préférence de 2 à 2,5, cette composition étant appliquée aux cultures à traiter en une quantité suffisante pour apporter par hectare une quantité efficace de sulfate de β 1-3 glucane et, dans le cas du sulfate de laminarine en une quantité suffisante pour apporter de 0,4 à 4g de sulfate de laminarine par hectare.

## Patentansprüche

1. Mittel zur Stimulierung bzw. Anregung des natürlichen Abwehrreagierens von landwirtschaftlich nützlichen Pflanzen und von Zierpflanzen bestehend aus einem β 1-3 Glucansulfat und, insbesondere, aus Laminarinsulfat dessen Sulfatierungsgrad höher als oder gleich 1,9 ist, vorzugsweise von 2 bis 2,5

2. Verwendung eines β 1-3 Glucansulfats und, insbesondere, von Laminarinsulfat dessen Sulfatierungsgrad höher als oder gleich 1,9 ist, und vorzugsweise von 2 bis 2,5 als Mittel zur Stimulierung bzw. Anregung des natürlichen Abwehrreagierens von landwirtschaftlich nützlichen Pflanzen und von Zierpflanzen.

3. Verfahren zur Stimulierung des natürlichen Abwehrreagierens von landwirtschaftlich nützlichen Pflanzen und von Zierpflanzen, **dadurch gekennzeichnet dass** auf die zu behandelnden Pflanzen eine wässerige Zusammensetzung aufgebracht wird, wobei diese wässerige Zusammensetzung eine wirksame Konzentrierung an einem β 1-3 Glucansulfat aufweist und insbesondere eine Konzentrierung von zumindest 1mg/Liter, vorzugsweise von zumindest 5mg/l und noch bevorzugter von zumindest 10mg/l, an Laminarinsulfat mit einem Sulfatierungsgrad der höher oder gleich 1,9 ist, vorzugsweise von 2 bis 2,5, wobei diese Zusammensetzung auf die zu behandelnden Pflanzen in einer Menge aufgebracht wird die genügend ist pro Hektar eine wirksame Menge an 1-3 Glucansulfat bereitzustellen und, im Fall von Laminarinsulfat in einer Menge die genügend ist pro Hektar von 0,4 bis 4g Laminarinsulfat bereitzustellen.

## Claims

1. Agent for the stimulation of the reactions of natural defence of agronomically useful and of decorative plants consisting of a β 1-3 glucan sulfate and especially of laminarin sulfate whose degree of sulfatation is higher than or equal to 1.9, preferably from 2 to 2.5.

2. Use of a β 1-3 glucan sulfate and especially of laminarin sulfate whose degree of sulfatation is higher than or equal to 1.9, preferably from 2 to 2.5 as agents for the stimulation of the reactions of natural defence of agronomically useful and of decorative plants.

3. Method for the stimulation of the reactions of natural defence of agronomically useful and of decorative plants, **characterized by** the fact that there is applied on the plants to be treated an aqueous composition comprising an efficient concentration in a sulfate of β 1-3 glucan and more particularly a concentration of at least 1 mg/l, preferably of at least 5 mg/l, and still more preferably of at least 10 mg/l in laminarin sulfate, whose degree of sulfatation is higher than or equal to 1.9, preferably from 2 to 2.5, the said composition being applied to the culture or crop to be treated in an amount sufficient to provide per hectare an efficient amount of sulfate of β 1-3 glucan, and in the case of laminarin sulfate in an amount sufficient to provide from 0.4 to 4 g of laminarin sulfate per hectare.
